Europäisches Patentamt

European Patent Office

Office européen des brevets

(11) Numéro de publication: **0 091 872
B1**

(12) **FASCICULE DE BREVET EUROPEEN**

(45) Date de publication du fascicule du brevet:
**14.08.85**

(21) Numéro de dépôt: **83400713.0**

(22) Date de dépôt: **08.04.83**

(51) Int. Cl.⁴: **G 21 C 1/02**

(54) **Dispositif collecteur et séparateur de métal liquide caloporteur dans un réacteur nucléaire à neutrons rapides.**

(30) Priorité: **09.04.82 FR 8206287**

(43) Date de publication de la demande:
**19.10.83 Bulletin 83/42**

(45) Mention de la délivrance du brevet:
**14.08.85 Bulletin 85/33**

(84) Etats contractants désignés:
**BE DE FR GB IT LU NL**

(56) Documents cités:
**EP - A - 0 055 963
FR - A - 2 150 256
FR - A - 2 220 847
FR - A - 2 333 328
FR - A - 2 461 336**

(73) Titulaire: **NOVATOME, 20 Avenue Edouard Herriot,
F-92350 Le Plessis Robinson (FR)**

(72) Inventeur: **Malaval, Claude, 115bis avenue du Bois de
Verrières, F-92160 Antony (FR)**

(74) Mandataire: **Poulin, Gérard et al, Société
BREVATOME 25, rue de Ponthieu, F-75008 Paris (FR)**

ACTORUM AG

# Description

L'invention concerne un dispositif collecteur et séparateur de métal liquide caloporteur dans un réacteur nucléaire à neutrons rapides.

Les réacteurs nucléaires à neutrons rapides comportent généralement une cuve à symétrie de révolution autour d'un axe vertical remplie d'un métal liquide tel que le sodium. Le cœur du réacteur constitué par des assemblages combustibles dont la partie inférieure est engagée dans un sommier, reposant lui-même sur un support ou platelage en appui sur le fond de la cuve, est entièrement immergé dans le sodium liquide servant de liquide caloporteur. Des pompes pour la mise en circulation du sodium liquide sont plongées dans la cuve, de façon que leurs orifices d'aspiration viennent au niveau d'une zone de la cuve recevant du sodium refroidi. Ce sodium froid est renvoyé par les pompes, à la base du cœur, dans le sommier.

Le sodium s'échauffe en traversant le cœur de bas en haut et passe, après sa sortie du cœur du réacteur, dans des échangeurs de chaleur intermédiaires plongés dans la cuve du réacteur. Ces échangeurs intermédiaires disposés verticalement comportent une fenêtre d'entrée du sodium chaud à leur partie supérieure et une fenêtre de sortie du sodium refroidi à leur partie inférieure. Dans son parcours, à l'intérieur de l'échangeur de chaleur, le sodium liquide échauffe un second liquide caloporteur qui peut être également du sodium liquide, lui-même utilisé pour la vaporisation de l'eau alimentaire et la production de vapeur utilisée à la turbine de la centrale nucléaire.

La fenêtre de sortie des échangeurs de chaleur est disposée au niveau de la zone de la cuve renfermant le sodium froid qui est repris par les pompes pour être injecté à la base du cœur.

Les pompes et les échangeurs sont fixés à l'intérieur d'orifices de passage ménagés dans une dalle horizontale de fermeture de la cuve, de façon qu'ils soient tous situés sensiblement à la même distance de l'axe de la cuve.

Dans les réacteurs nucléaires construits actuellement, on dispose ainsi quatre pompes associées chacune à deux échangeurs de chaleur situés de part et d'autre de la pompe, sur une couronne périphérique de la dalle horizontale fermant la cuve.

A l'intérieur de la cuve du réacteur, il est nécessaire de délimiter une zone renfermant le sodium chaud et une zone recevant le sodium froid sortant des échangeurs de chaleur. On prévoit donc une paroi séparant ces deux zones à l'intérieur de la cuve. Cependant, cette paroi doit supporter à la fois la haute température du sodium chaud (550°) et la différence de pression du sodium entre la partie chaude et la partie froide. On double donc la paroi de séparation par une seconde paroi qui délimite avec la première un espace à l'intérieur duquel le sodium est stagnant. Ce sodium reste donc plus froid que le sodium mis en circulation à l'intérieur du cœur, si bien que la seconde paroi est à une température inférieure lui permettant de supporter les contraintes mécaniques dues à la surpression.

De plus, pour refroidir la cuve du réacteur ou cuve principale, il est nécessaire d'établir une circulation de sodium provenant de la base du cœur au contact de cette cuve principale. Pour cela on double la cuve principale par un baffle disposé à faible distance de la cuve principale et permettant une circulation d'une lame de sodium froid au contact de la cuve principale.

La cuve principale du réacteur renferme donc une structure complexe constituant en particulier les cuves internes et séparant l'intérieur de la cuve en une zone de sodium chaud, une zone de sodium stagnant et une zone de sodium froid.

Les échangeurs et les pompes doivent traverser successivement ces trois zones à des températures et pressions différentes si bien qu'il faut prévoir autour de ces composants un ensemble de viroles de passage permettant d'isoler les trois zones différentes, tout en gardant une possibilité de démontage de ces composants.

La conception et la construction d'une telle structure sont extrêmement complexe et extrêmement onéreuses. Cette structure nécessite l'utilisation de très grandes quantités d'aciers spéciaux pour la fabrication du baffle, des cuves internes et des cheminées de passage des composants.

Enfin, les espaces ménagés entre le baffle et la cuve principale et entre le baffle et la première cuve où circule la lame de sodium de refroidissement sont de très faible largeur, si bien qu'en cas de séisme des pressions élevées peuvent être transmises de la cuve principale au baffle et à la première cuve interne. Ces éléments de structure peuvent alors subir des déformations préjudiciables pour le fonctionnement ultérieur du réacteur.

Le but de l'invention est donc de proposer un dispositif collecteur et séparateur de métal liquide caloporteur dans un réacteur nucléaire à neutrons rapides comportant une cuve à symétrie de révolution autour d'un axe vertical, un cœur plongé dans du métal liquide remplissant la cuve ainsi que des pompes de mise en circulation du métal liquide et des échangeurs de chaleur pour le refroidissement du métal liquide sortant du cœur, plongés dans ce métal liquide, et disposés verticalement dans la cuve sensiblement à égale distance de l'axe de celle-ci, les pompes prélevant le métal liquide refroidi sortant des échangeurs pour le renvoyer à la base du cœur et les échangeurs de chaleur comportant une fenêtre d'entrée à leur partie supérieure par laquelle pénère le métal liquide chaud sortant du cœur et une fenêtre de sortie à leur partie inférieure par où sort le métal liquide refroidi, ce dispositif permettant de simplifier et de rendre moins onéreuse la structure interne de la cuve du réacteur et d'améliorer la tenue de celle-ci aux séismes.

Dans ce but, le dispositif comporte:
— une enveloppe métallique torique à section circulaire disposée avec son axe de révolution confondu avec l'axe de la cuve à la partie inférieure de celle-ci à la verticale des pompes et échangeurs de chaleur reposant sur le support du cœur et comportant, dans sa paroi à sa partie supérieure, des orifices centrés sur le cercle directeur supérieur de l'enveloppe torique, correspondant à chacune des pompes et à chacun des échangeurs pour le passage de leur partie inférieure comportant les orifices d'aspiration et les fenêtres de sortie respectivement, dans le volume interne de l'enveloppe torique, et

— une paroi verticale de séparation du métal liquide chaud et du métal liquide froid fixée sur l'enveloppe torique, au-dessus de celle-ci, et constituée par les cheminées de passage des pompes et les cheminées de passage des échangeurs de chaleur disposées au niveau des ouvertures correspondantes des pompes et échangeurs et par des parois de jonction entre ces cheminées pour la constitution d'une paroi continue suivant la périphérie de la cuve.

Afin de bien faire comprendre l'invention, on va maintenant décrire, à titre d'exemple non limitatif, en se référant aux figures jointes en annexe, la structure interne d'une cuve d'un réacteur nucléaire à neutrons rapides selon l'art antérieur et la structure interne d'une cuve équipée d'un dispositif collecteur et séparateur suivant l'invention et suivant plusieurs modes de réalisation.

La fig. 1 est une vue en coupe par un plan vertical de symétrie de la structure interne d'une cuve suivant l'art antérieur.

La fig. 2 est une vue analogue à la vue de la fig. 1 de la structure interne de la cuve d'un réacteur à neutrons rapides équipé d'un dispositif collecteur et séparateur suivant l'invention et suivant un premier mode de réalisation.

La fig. 3 est une vue en perspective d'une portion du dispositif collecteur suivant l'invention représenté à la fig. 2.

La fig. 4 est une vue de dessus du dispositif collecteur suivant l'invention représenté aux fig. 2 et 3.

La fig. 5 est une vue en coupe suivant AA de la fig. 4.

La fig. 6 est une vue en coupe suivant BB de la fig. 4.

La fig. 7 est une vue en coupe par un plan vertical de symétrie de la structure interne de la cuve d'un réacteur nucléaire à neutrons rapides équipé d'un dispositif collecteur et séparateur suivant l'invention et suivant un second mode de réalisation.

La fig. 8 est une vue en perspective d'une portion du dispositif collecteur représenté à la fig. 7.

La fig. 9 est une vue de dessus du dispositif collecteur représenté à la fig. 7.

La fig. 10 est une vue en coupe suivant CC de la fig. 9.

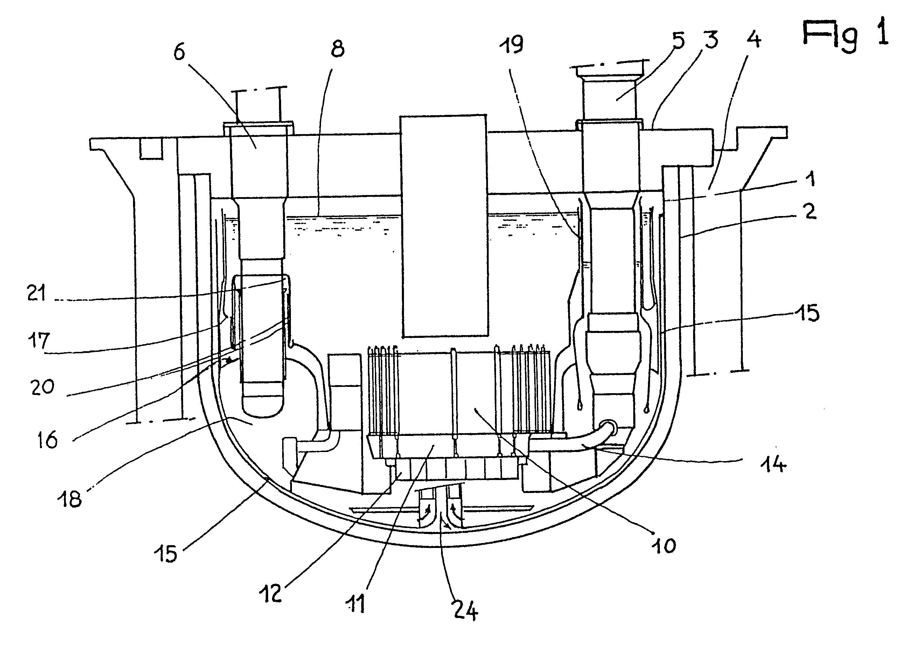

Sur la fig. 1, on voit la cuve principale 1 d'un réacteur nucléaire à neutrons rapides disposée à l'intérieur de la cuve de sécurité 2, ces deux cuves étant fixées à la partie inférieure de la dalle 3 du réacteur reposant sur le puits de cuve 4.

Une pompe 5 et un échangeur 6 sont disposés à égale distance de l'axe de la cuve en appui sur la dalle 3. Les composants 5 et 6 plongent sous le niveau de sodium 8 remplissant la cuve 1.

Le cœur 10 du réacteur constitué par des assemblages fixés sur le sommier 11 repose sur le platelage 12. Le cœur 10 est entièrement immergé sous le niveau 8 du sodium liquide.

Le conduit de refoulement 14 de la pompe 5 débouche à l'intérieur du sommier 11.

La cuve principale 1 renferme un baffle 15 disposé à une distance faible de la surface intérieure de la cuve principale, une première cuve interne 16 constituée par une virole cylindrique se raccordant à un redan torique à sa partie inférieure et une seconde cuve interne 17 constituée par une virole cylindrique se raccordant à sa partie inférieure à un redan conique.

Entre ces deux cuves internes 16 et 17 est emprisonné le sodium stagnant. Les redans torique et conique reposent sur le platelage 12 à la partie périphérique du cœur.

La partie torique de la cuve 16, une partie du baffle 15 et la périphérie du platelage limitent le collecteur de sodium froid 18.

La partie inférieure de la pompe 5 comportant les ouvertures d'aspiration de cette pompe plonge dans le sodium froid contenu dans le collecteur 18.

La pompe 5 est entourée par deux viroles 19 jusqu'à un niveau supérieur au niveau du sodium 8. De cette façon, la pompe 5 est entourée par trois espaces périphériques successifs renfermant du sodium froid, du sodium stagnant et du sodium chaud.

L'échangeur intermédiaire 6 et les cuves internes 16 et 17 comportent un ensemble de viroles 20 permettant d'établir autour de l'échangeur des niveaux de sodium froid, de sodium stagnant et de sodium intermédiaire, sous une couverture d'argon 21.

Le baffle 15 comporte une ouverture 24 à sa partie inférieure pour le passage de sodium froid provenant de la partie inférieure du cœur, ce sodium froid remontant dans l'espace entre le baffle 15 et la cuve principale 1 pour le refroidissement de celle-ci avant de s'écouler à la partie supérieure du baffle dans un espace permettant son retour dans le collecteur froid 18.

Le sodium froid est aspiré par les pompes 5 dans le collecteur froid 18 puis réinjecté à la base du cœur par les canalisations de refoulement 14. Ce sodium s'échauffe dans la traversée du cœur, ressort du cœur à haute température (550°) puis pénètre dans les échangeurs par les fenêtres d'entrée de ceux-ci disposées dans la zone de sodium chaud.

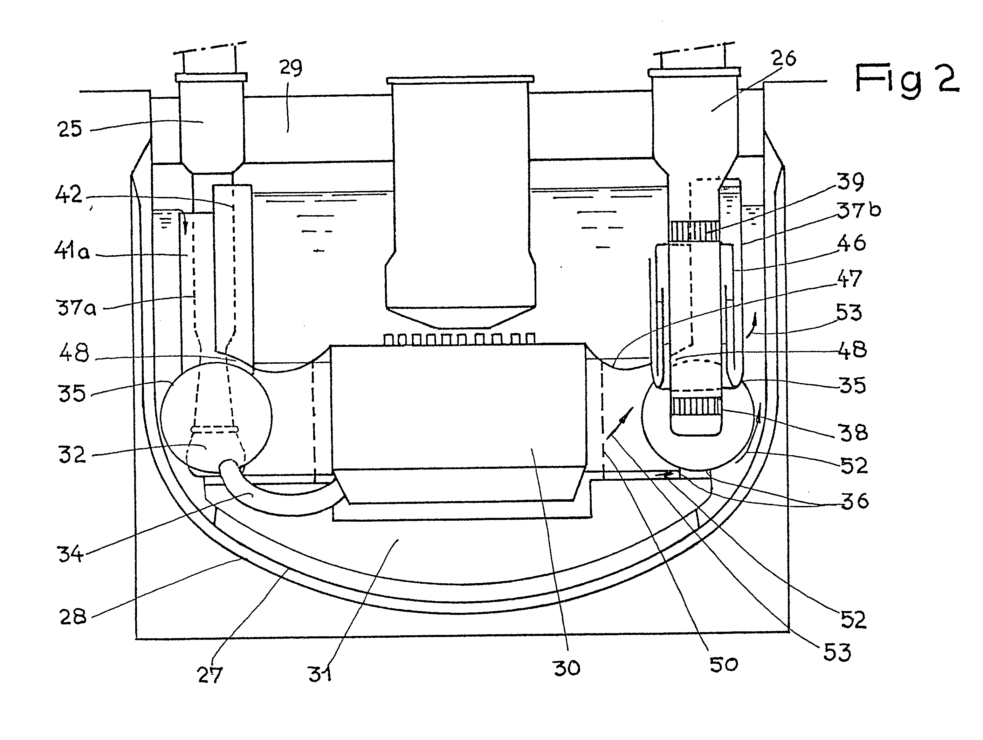

Sur la fig. 2, on voit la cuve principale 27 d'un réacteur nucléaire à neutrons rapides, entourée par la cuve de sécurité 28. Les cuves 27 et 28 sont fixées sous la dalle 29 traversée par les pompes 25 et les échangeurs 26 plongeant dans le sodium liquide remplissant la cuve 27.

Le cœur du réacteur 30 repose par l'intermédiaire de son sommier sur le platelage 31.

La pompe 25 repose également sur le platelage 31 à la périphérie du cœur par l'intermédiaire d'une sphère de refoulement 32 reliée à la canalisation 34 débouchant dans le sommier constituant la base du cœur.

Le dispositif collecteur et séparateur suivant l'invention comporte une enveloppe torique 35 reposant par l'intermédiaire de deux viroles 36 discontinues sur la périphérie du platelage, pour laisser circuler le sodium dans la direction transversale.

Au niveau des pompes 25, l'enveloppe torique 35 est raccordée de façon étanche à la sphère 32 qui elle-même repose sur les viroles 36, le long d'une ouverture ménagée dans l'enveloppe 35 à sa partie inférieure.

Le dispositif collecteur et séparateur comporte également des parois verticales qui se prolongent vers le haut et qui constituent des cheminées 37 au niveau des pompes et des échangeurs de chaleur dont la partie inférieure pénètre dans le volume intérieur de l'enveloppe torique 35.

La partie inférieure de la pompe 25 pénétrant dans l'enveloppe torique 35 comporte les orifices d'aspiration de la pompe alors que la partie inférieure de l'échangeur 26 disposée à l'intérieur de l'enveloppe torique 35 comporte la fenêtre de sortie du sodium froid 38 de cet échangeur 26.

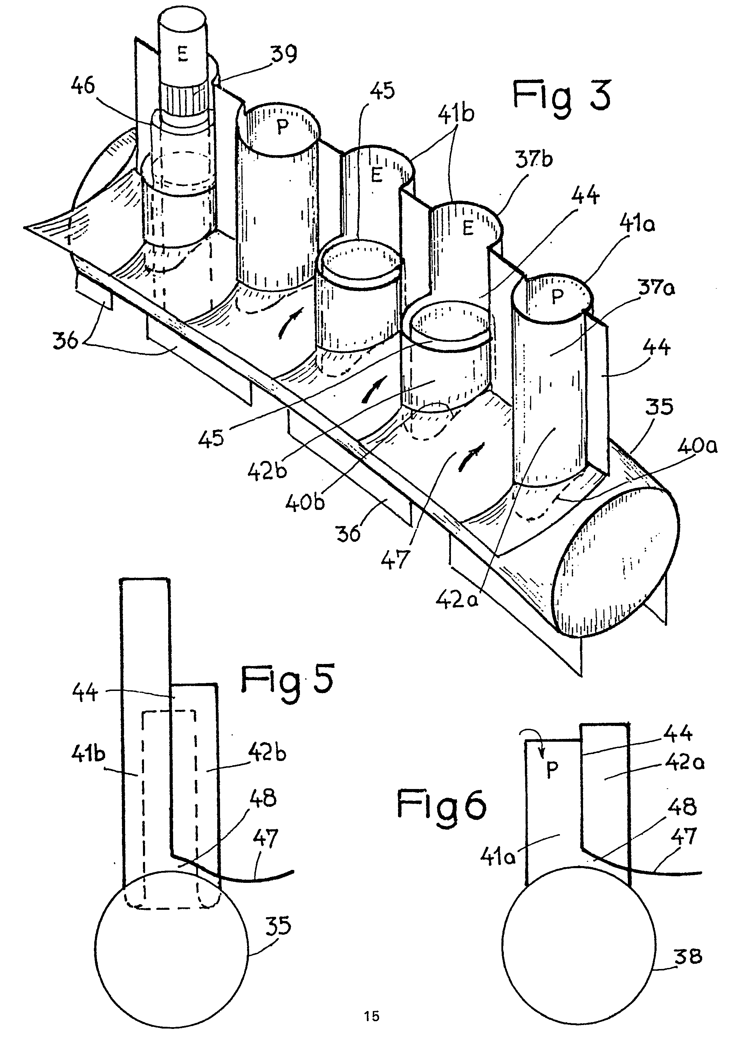

On va maintenant décrire de façon plus détaillée, en se reportant aux fig. 3 à 6, la structure du dispositif collecteur et séparateur suivant l'invention.

Sur la fig. 3, on voit une portion de l'enveloppe torique 35 ainsi que plusieurs cheminées 37 de passage des pompes ou échangeurs de chaleur. Le collecteur constitué par l'enveloppe torique 35 comporte, dans la partie supérieure de sa paroi, des ouvertures 40a et 40b centrées sur le cercle directeur supérieur du tore 35. Les ouvertures 40a permettent le passage des parties inférieures de pompes 25 dans l'espace intérieur du tore et les ouvertures 40b permettent le passage des parties inférieures des échangeurs de chaleur 26.

La partie supérieure du dispositif collecteur et séparateur est constituée par une paroi verticale comprenant des portions cylindriques et des portions planes. Les portions cylindriques constituent les cheminées de passage des pompes 37a et des échangeurs de chaleur 37b.

Chacune des cheminées de pompe 37a est constituée par une demi-paroi externe 41a et une demi-paroi interne 42a reliées suivant deux génératrices. La demi-paroi interne 42a a une hauteur supérieure à la demi-paroi externe 41a.

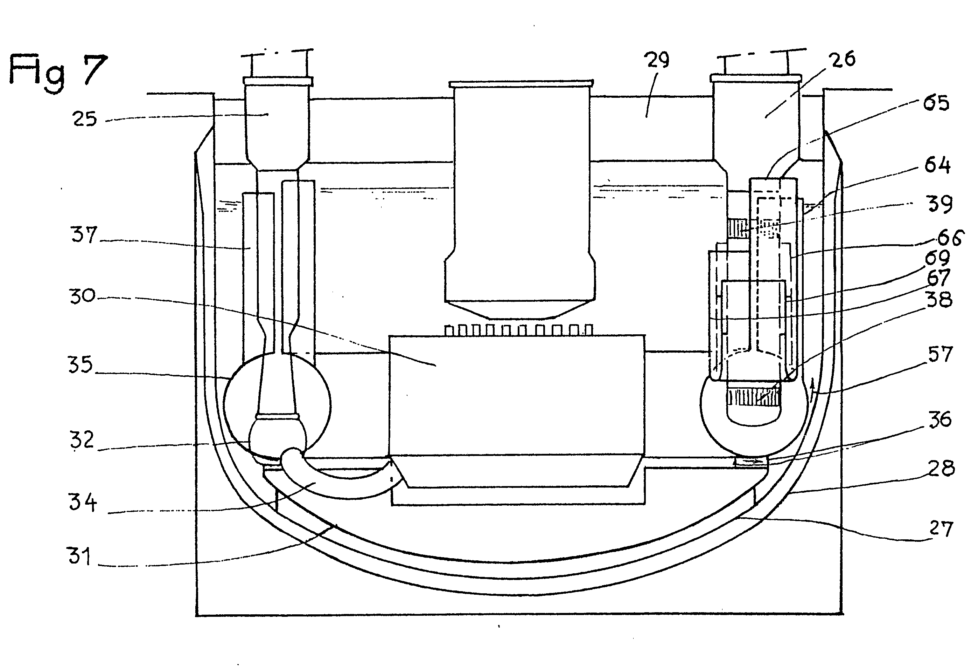

Chacune des cheminées d'échangeur de chaleur 37b est constituée par une demi-paroi externe 41b et une demi-paroi interne 42b reliées suivant deux génératrices et une virole intérieure 45 reliée, à sa partie inférieure, à l'intérieur de l'enveloppe torique, au bord inférieur des demi-parois 41b et 42b, pour constituer un bac annulaire, ainsi qu'il est visible sur la fig. 5. La virole d'étanchéité 46 de l'échangeur de chaleur correspondant plonge dans le bac annulaire et réalise la séparation du sodium chaud et du sodium froid, un gaz neutre étant introduit sous pression sous cette virole 46. La demi-paroi externe 41b a une hauteur supérieure à la demi-paroi 42b. La fenêtre d'entrée 39 de l'échangeur est à un niveau intermédiaire entre le bord supérieur de la paroi 41b et le bord supérieur de la paroi 42b. Les cheminées 37b sont reliées entre elles et aux cheminées 37a par des parois planes verticales 44. L'ensemble des cheminées 37 et des parois 44 constitue ainsi une paroi continue sur toute la périphérie de la cuve, permettant la séparation du sodium chaud et du sodium froid.

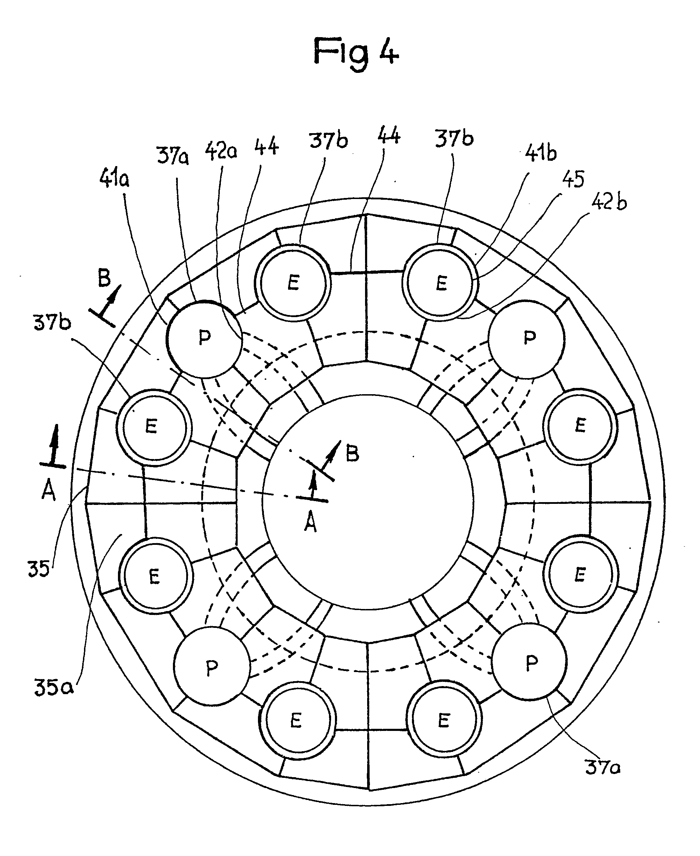

Sur la fig. 4, on voit, en vue de dessus, l'ensemble des cheminées de passage des composants du réacteur.

Ces cheminées de passage sont de deux types, les cheminées 37a permettant le passage d'une pompe, et les cheminées 37b le passage d'un échangeur de chaleur.

Il existe, pour l'ensemble du réacteur, quatre passages 37a pour la disposition des quatre pompes associées chacune à deux échangeurs de chaleur disposés dans des cheminées de passage 37b.

Sur le pourtour du réacteur nucléaire on a donc successivement une pompe puis deux échangeurs puis une pompe ... .

On voit que l'enveloppe torique 35 n'a pas une forme géométrique parfaite puisqu'elle est constituée par des segments cylindriques 35a reliés entre eux suivant des sections dont les plans passent tous par l'axe vertical de la cuve. L'enveloppe torique 35 est réalisée à partir d'éléments cylindriques modulaires assemblés par soudage bord à bord.

Comme il est visible sur les fig. 3, 5 et 6, les demi-parois 41b et 42b des cheminées d'échangeurs de chaleur 37b sont soudées le long du bord des orifices 40b, et les demi-parois 41a et 42a sont soudées le long du bord des orifices 40a de l'enveloppe torique 35. Les parois 41b et 42b sont prolongées vers le bas à l'intérieur de l'enveloppe 35 où elles sont reliées à la virole intérieure 45. Les parois planes 44 sont soudées aux cheminées le long des génératrices de jonction entre les demi-parois cylindriques. Le bord inférieur de ces parois de jonction 44 est au-dessus de la surface supérieure de l'enveloppe torique 35, un espace 48 étant ménagé pour le passage de sodium froid de l'intérieur vers l'extérieur du dispositif collecteur et séparateur. Des déflecteurs 47 dont la concavité est dirigée vers le haut sont soudés aux plaques de jonction 44, le long de leur bord inférieur, et constituent une couronne déflectrice continue au-dessus et à la partie interne de l'enveloppe torique 35. L'extrémité interne de ces déflecteurs 47 est reliée à une virole collectrice 50 reposant sur le platelage 31 à la périphérie du cœur. La virole 50 est percée pour laisser passer les fuites de sodium venant du cœur 30.

Pendant le fonctionnement du réacteur, le sodium liquide froid est aspiré par les pompes 25 dans l'enveloppe torique 35 constituant le collecteur froid. Ce sodium est envoyé par les conduites 34, à la base du cœur. Une partie de ce sodium froid passe à l'intérieur du sommier supportant le cœur 30, circule radialement et sort de l'espace interne ménagé par l'enveloppe torique 35 par les espaces prévus entre les viroles de support 36 de l'enveloppe 35 (flèches 52). Une autre partie du sodium ressort du cœur par les perçages de la virole 50 et sort de l'espace interne ménagé par l'enveloppe torique 35, par les espaces 48 (flèches 53) grâce aux déflecteurs 47.

Ce sodium froid contournant le tore soit à sa partie inférieure, soit à sa partie supérieure, circule ensuite en contact avec la paroi interne de la cuve principale 27. On assure ainsi le refroidissement de cette cuve.

Le sodium froid revient ensuite dans le collecteur torique 35 en se déversant au niveau du bord supérieur des parois 41a des cheminées de pompes. La plus grande partie du sodium traverse le cœur 30 dans lequel il s'échauffe et ressort dans le collecteur chaud limité au-dessus du cœur 30 et de l'enveloppe torique 35, par les parois 42a des cheminées de pompes, les parois 41b des cheminées d'échangeurs et les parois de jonction 44. Le sodium chaud pénètre dans les échangeurs de chaleur 26 par leurs fenêtres supérieures d'entrée 39 débouchant dans le collecteur chaud au-dessus des parois 42b. Le sodium chaud se refroidit dans les échangeurs 26 et revient au collecteur froid, c'est-à-dire le volume intérieur de l'enveloppe torique, par les fenêtres de sortie inférieures 38.

Sur la fig. 7, on voit une cuve de réacteur nucléaire à neutrons rapides renfermant un dispositif collecteur et séparateur de métal liquide suivant l'invention et suivant un second mode de réalisation. Les éléments correspondants sur les fig. 1 et 7 portent les mêmes repères.

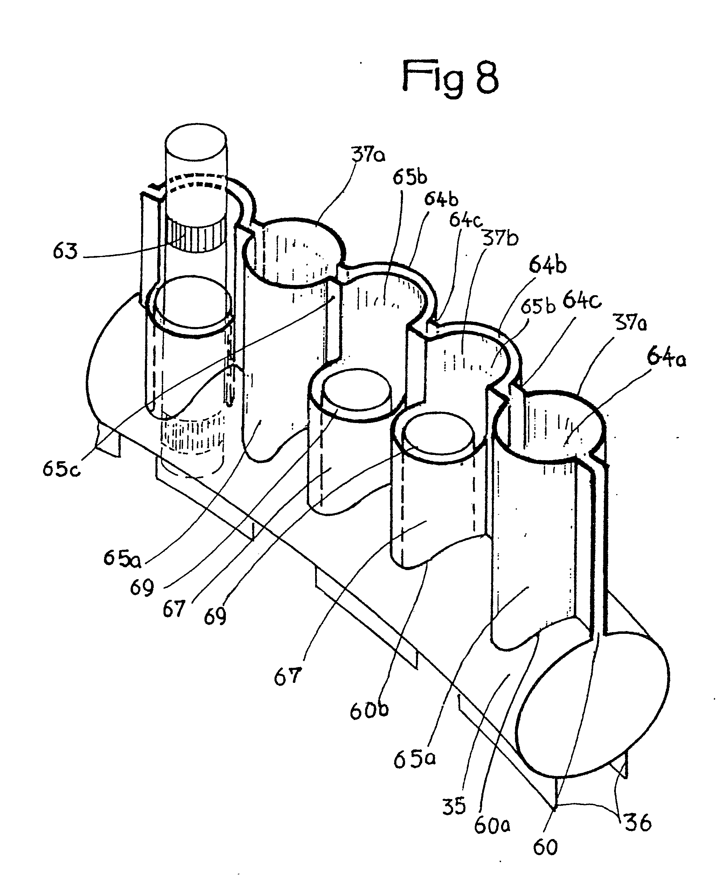

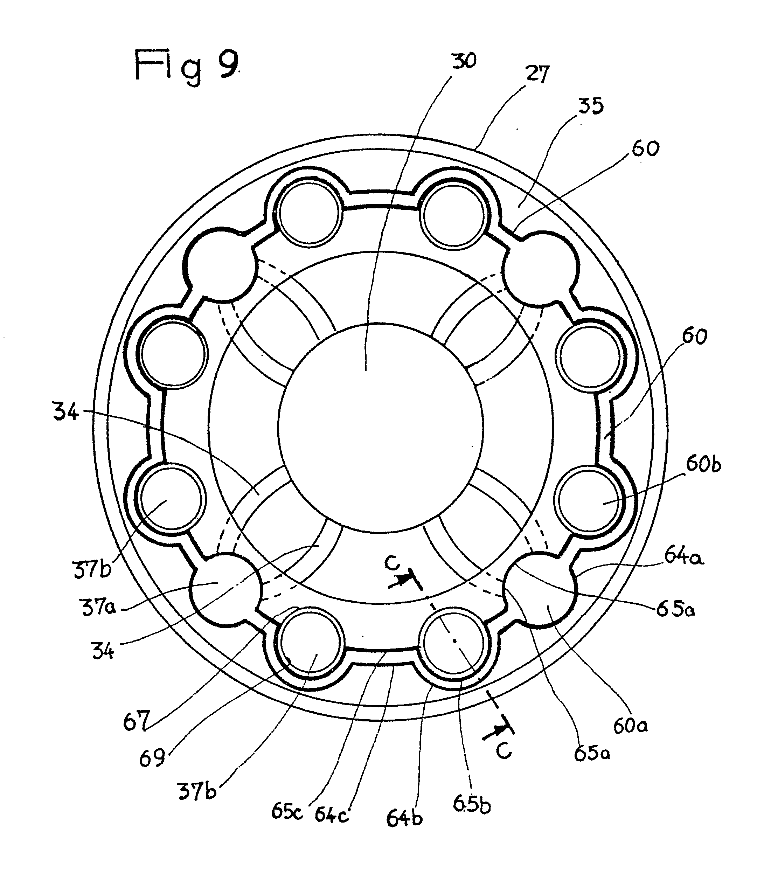

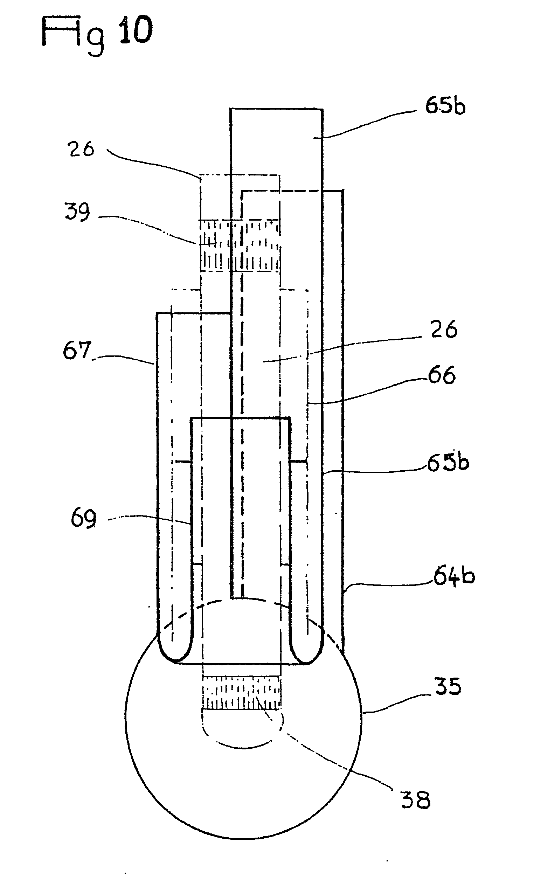

Sur les fig. 8, 9 et 10, on voit de façon plus détaillée le dispositif collecteur et séparateur suivant ce second mode de réalisation.

Le collecteur torique 35 comporte une fente continue 60 de faible largeur à sa partie supérieure sur laquelle sont centrées les ouvertures 60a et 60b des pompes et des échangeurs de chaleur respectivement.

Les cheminées de pompes 37a sont constituées chacune par une demi-paroi externe 64a et une demi-paroi interne 65a en forme de portions de cylindres soudées sur l'enveloppe 35 le long du bord externe et le long du bord interne de l'ouverture 60a de passage de la pompe, respectivement. Les cheminées d'échangeurs 37b sont constituées chacune par une première demi-paroi cylindrique externe 64b, une seconde demi-paroi cylindrique externe 65b parallèle à la paroi 64b et une demi-paroi interne cylindrique 67. La demi-paroi 64b est soudée sur le bord externe de l'ouverture 60b de passage de l'échangeur et la demi-paroi 67 sur le bord interne de l'ouverture 60b.

Des parois planes de jonction 64c permettent de relier les demi-parois 64b entre elles et aux demi-parois 64a. L'ensemble des éléments cylindriques ou plans verticaux 64a, 64b et 64c constitue une paroi 64 fixée le long du bord externe de l'ouverture 60, 60a, 60b sur la surface supérieure de l'enveloppe torique 35.

Des parois planes de jonction 65c permettent de relier les parois 65b entre elles et aux demi-parois 65a. L'ensemble 65a, 65b et 65c constitue une paroi 65 fixée le long du bord interne de l'ouverture 60-60a, en ce qui concerne les demi-parois 65a des cheminées de pompes et les parois de jonction. Les demi-parois 65b des cheminées de pompes ne sont pas reliées directement à l'enveloppe 35, leur bord inférieur étant disposé au-dessus de l'ouverture 60b correspondante. Les cheminées d'échangeurs 37b comportent de plus une virole intérieure 69 reliée à sa partie inférieure à la demi-paroi 65b et à la demi-paroi 67 qui sont elles-mêmes reliées entre elles, le long de deux génératrices. On constitue ainsi un bac annulaire dans lequel plonge la virole d'étanchéité 66 de l'échangeur de chaleur.

La première paroi 64 a une hauteur inférieure à la seconde paroi 65. Les demi-parois 67 des cheminées d'échangeurs ont une hauteur inférieure à la hauteur des demi-parois 65b, de façon que la fenêtre supérieure d'entrée 63 de l'échangeur débouche dans la partie intérieure de la cuve limitée par la paroi 65 et renfermant le sodium chaud. Le sodium froid est récupéré dans l'enveloppe torique 35 où il est aspiré par les pompes pour être refoulé par les conduites 34, à la base du cœur 30. Une partie de ce sodium circule radialement dans le sommier-support du cœur et contourne la partie inférieure de l'enveloppe torique, entre les viroles de support 36 pour venir circuler, à l'extérieur de la paroi 64, en contact avec la cuve 27 qui est ainsi refroidie (flèches 57). La plus grande partie du sodium traverse le cœur 30, s'y échauffe et ressort dans le collecteur chaud limité au-dessus du cœur 30 et du collecteur torique 35 par la paroi 65. Le sodium chaud traverse ensuite les échangeurs de chaleur, se refroidit et revient dans le volume interne du collecteur torique 35 constituant le collecteur froid. Le collecteur torique 35 et l'espace entre les parois 64 et 65 renferment du sodium froid alors que l'espace interne de la cuve, à l'intérieur de la paroi 65, renferme du sodium chaud.

Dans ce second mode de réalisation, les dilatations différentielles de l'enveloppe torique 35 peuvent être absorbées puisque la paroi de celle-ci est ouverte sur toute sa circonférence, à sa partie supérieure.

En revanche, le poids de métal utilisé est plus important que dans le cas du premier mode de réalisation.

On voit donc par comparaison des dispositifs représentés aux fig. 1 d'une part et 2 et 7 d'autre part que le dispositif suivant l'invention permet de réaliser le recueil du sodium froid et la séparation du sodium froid et du sodium chaud avec une structure unitaire qui peut être préassemblée avant son montage en cuve et qui remplace l'ensemble des cuves internes, du baffle et des cheminées de la structure suivant l'art antérieur. Il en résulte un gain important de poids des structures internes et un gain important sur le coût de construction du réacteur.

En effet, dans le cas d'un réacteur d'une puissance de 1200 MW, l'ensemble de la masse du baffle, des cuves internes et des viroles et cheminées des composants est de l'ordre de 785 tonnes alors que la structure suivant l'invention remplaçant cet ensemble présente une masse de l'ordre de 320 tonnes ou inférieure.

Cela a une grande influence sur le coût de construction du réacteur nucléaire, puisque les structures internes doivent être réalisées en aciers spéciaux.

Le montage des pompes est facilité par le fait que les sphères de refoulement de ces pompes sont fixées sur l'enveloppe torique 35 et mises en place en fond de cuve avec cette enveloppe torique.

Il suffit alors de descendre la pompe dans son ouverture de passage et d'engager sa partie inférieure dans la sphère de refoulement pour en réaliser le montage.

Le montage des échangeurs de chaleur intermédiaires peut être réalisé par des opérations pratiquement identiques à celles nécessaires pour le montage des échangeurs de chaleur dans une cuve selon l'art antérieur. Cependant, le montage est quelque peu facilité par le fait que l'échangeur de chaleur ne comporte qu'une virole d'étanchéité 46 ou 66 au lieu de deux viroles dans le cas où l'étanchéité doit être réalisée entre le sodium froid, le sodium stagnant et le sodium chaud.

Les hauteurs des parois 41 et 42, dans le cas du premier mode de réalisation, sont choisies en fonction des caractéristiques dimensionnelles de la cuve et de ses composants et du niveau de sodium dans la cuve.

Il est bien évident également que la hauteur des parois 64 et 65 et des parois complémentaires cylindriques 67 est choisie en fonction des caractéristiques dimensionnelles de la cuve et de ses composants et du niveau du sodium dans cette cuve, dans le cas du second mode de réalisation.

On voit donc que les principaux avantages du dispositif suivant l'invention sont liés à la simplification, à l'allégement et à la réduction du coût des structures internes du réacteur nucléaire.

Un autre avantage est d'éviter des lames de sodium liquide de trop faible largeur entre la cuve et les structures internes, ce qui améliore la tenue aux séismes du réacteur.

L'invention ne se limite pas aux modes de réalisation qui ont été décrits; c'est ainsi que la forme des parois et la disposition de ces parois par rapport à l'enveloppe torique peuvent être différentes de ce qui a été décrit.

Le mode de réalisation de l'espace annulaire d'étanchéité des échangeurs de chaleur peut également être différent.

L'invention s'applique, quel que soit le nombre de pompes et d'échangeurs de chaleur du réacteur et quelle que soit la disposition relative de ses composants.

L'invention s'applique ainsi dans le cas de tout réacteur nucléaire à neutrons rapides de type intégré.

**Revendications**

1. Dispositif collecteur et séparateur de métal liquide dans un réacteur nucléaire à neutrons rapides de type intégré comportant une cuve (27) à symétrie de révolution autour d'un axe vertical, un cœur (30) plongé dans du métal liquide remplissant la cuve ainsi que des pompes (25) de mise en circulation du métal liquide sortant du cœur (30), plongés dans ce métal liquide et disposés verticalement dans la cuve, sensiblement à égale distance de l'axe de celle-ci, les pompes (25) prélevant le métal liquide refroidi sortant des échangeurs (26) pour le renvoyer à la base du cœur et les échangeurs de chaleur comportant une fenêtre d'entrée (39) à leur partie supérieure par laquelle pénètre le métal liquide chaud et sortant du cœur (30) et une fenêtre de sortie (38) à leur partie inférieure par où sort le métal liquide refroidi, caractérisé par le fait qu'il comporte:

— une enveloppe métallique torique (35) à section circulaire disposée avec son axe de révolution confondu avec l'axe de la cuve (27) à la partie inférieure de celle-ci à la verticale des pompes (25) et échangeurs de chaleur (26) reposant sur le support du cœur (30) et comportant, dans sa paroi à sa partie supérieure, des orifices (40, 60) centrés sur le cercle directeur supérieur de l'enveloppe torique (35) correspondant à chacune des pompes (25) et à chacun des échangeurs (26) pour le passage de leur partie inférieure comportant les orifices d'aspiration et les fenêtres de sortie (38), respectivement, dans le volume interne de l'enveloppe torique (35), et

— une paroi verticale de séparation du métal liquide chaud et du métal liquide froid fixée sur l'enveloppe torique (35) au-dessus de celle-ci et constituée par des cheminées de passage (37a) des pompes (25) et les cheminées de passage (27b) des échangeurs de chaleur (26) disposées au niveau des ouvertures (40, 60) correspondantes des pompes et échangeurs et par des parois de jonction (44, 64c, 65c) entre ces cheminées (37) pour la constitution d'une paroi continue suivant la périphérie de la cuve (27).

2. Dispositif collecteur et séparateur suivant la revendication 1, caractérisé par le fait que les cheminées de pompes (37a) sont constituées chacune par une demi-paroi cylindrique externe (41a) et une demi-paroi cylindrique interne (42a) de hauteur supérieure à la demi-paroi externe (41a) fixées sur l'enveloppe torique (35) le long du bord de l'ouverture (40a), que les cheminées d'échangeurs de chaleur (37b) sont constituées chacune par une demi-paroi cylindrique externe (41b) et une demi-paroi cylindrique interne (42b) de hauteur inférieure à la hauteur de la demi-paroi (41b) fixées sur l'enveloppe torique (35) le long du bord de l'ouverture (40b) et par une virole intérieure (45) reliée à sa partie inférieure aux demi-parois (41b et 42b), à l'intérieur de l'enveloppe torique (35), constituant un bac annulaire d'étanchéité pour l'échangeur de chaleur et que les parois de jonction (44) reliant les demi-parois entre elles ont un bord inférieur situé au-dessus de la surface supérieure de l'enveloppe torique (35).

3. Dispositif collecteur et séparateur suivant la revendication 1, caractérisé par le fait que l'enveloppe torique (35) comporte, traversant sa paroi à sa partie supérieure, une fente annulaire fermée (60) limitée par deux cercles directeurs voisins sur laquelle sont centrés les ouvertures de pompes et échangeurs de chaleur (60a et 60b), que la paroi verticale de séparation du métal liquide chaud et du métal liquide froid est constituée par une première paroi (64) fixée le long du bord externe de l'ouverture constituée par la fente (60) et les ouvertures de passage des pompes et échangeurs (60a et 60b), par une seconde paroi (65) fixée le long du bord interne de la fente (60) et des ouvertures de passage des pompes (60a) et comportant, au niveau de passages d'échangeurs de chaleur (60b), des demi-parois cylindriques parallèles aux parties correspondantes de la première paroi (64) et par des demi-parois cylindriques (67) fixées sur l'enveloppe torique (35) le long du bord interne des ouvertures d'échangeurs de chaleur (60b) et sur la seconde paroi (65) suivant deux génératrices verticales, une virole intérieure (69) étant disposée à l'intérieur de la cheminée (37b) de chacun des échangeurs et reliée à la paroi (65) et à la demi-paroi (67) pour constituer un bac annulaire d'étanchéité de l'échangeur de chaleur, à l'intérieur de l'enveloppe torique (35).

4. Dispositif collecteur et séparateur suivant l'une des revendications 1, 2 ou 3, caractérisé par le fait que l'enveloppe torique (35) repose sur le platelage (31) de support du cœur (30) à la partie périphérique de celui-ci, au moyen de deux viroles discontinues (36).

5. Dispositif collecteur et séparateur suivant l'une des revendications 1, 2 ou 3, caractérisé par le fait qu'un espace est ménagé entre le tore (35) et la cuve principale (27) du réacteur pour le passage de sodium froid venant de la partie inférieure du cœur (30) et qu'un espace libre annulaire est ménagé entre la face externe de la paroi verticale de séparation du métal liquide chaud et du métal liquide froid et la face interne de la paroi de la cuve (27), pour la circulation de ce métal liquide froid.

6. Dispositif collecteur et séparateur suivant la revendication 2, caractérisé par le fait que des déflecteurs de métal liquide (47) sont fixés au-dessus de l'enveloppe métallique torique (35) à l'intérieur de la paroi verticale, le long du bord inférieur des parois de jonction (44), ces déflecteurs (47) ayant leur concavité tournée vers le haut, pour le guidage de métal liquide froid vers la paroi intérieure de la cuve principale (27).

7. Dispositif collecteur et séparateur suivant l'une des revendications 1 ou 2, caractérisé par le fait que l'enveloppe métallique torique (35) est constituée par des portions cylindriques droites assemblées bout à bout suivant des sections correspondant à des plans se coupant tous suivant l'axe vertical de la cuve (27) du réacteur et que les plaques de jonction (44) entre les cheminées (37) sont planes.

8. Dispositif collecteur et séparateur suivant l'une des revendications 1, 2 ou 3, caractérisé par le fait que chacune des pompes (25) comporte une sphère de refoulement (32) liée à des conduits de refoulement (34) fixés à l'intérieur d'une ouverture ménagée à la partie inférieure de l'enveloppe torique (35).

## Patentansprüche

1. Flüssigmetall-Sammel- und Trennvorrichtung in einem integrierten Schnellneutronenkernreaktor bestehend aus einem um eine Senkrechtachse drehsymmetrischen Druckbehälter (27), einem in Flüssigmetall im Druckbehälter eingetauchten Kern (30) sowie aus Pumpen (25) zum Umlauf des Flüssigmetalls und Wärmetauscher (26) zum Kühlen des aus dem Kern (30) austretenden Flüssigmetalls – Pumpen und Wärmetauscher sind in diesem Flüssigmetall eingetaucht und wesentlich im gleichen Abstand von der Achse des Druckbehälters senkrecht in diesem angeordnet –, wobei die Pumpen (25) das aus den Wärmetauschern (26) austretende gekühlte Flüssigmetall entnehmen zu dessen erneuten Rückführung unten in den Kern und wobei die Wärmetauscher an ihrem Oberteil ein Fenster (39) zum Eintritt des aus dem Kern (30) austretenden heissen Flüssigmetalls und an ihrem Unterteil ein Fenster (38) zum Austritt des gekühlten Flüssigmetalls aufweisen, dadurch gekennzeichnet, dass sie umfasst:

– ein auf der Abstützung des Kerns (30) aufliegender Torusmantel (35) aus Metall mit einem kreisförmigen Querschnitt, der mit seiner mit der Achse des Druckbehälters (27) zusammenfallenden Drehachse in dem Unterteil desselben, in der Senkrechte der Pumpen (25) und Wärmetauscher (26) angeordnet ist, wobei der Torusmantel (35) in dem oberen Teil seiner Wand, auf den oberen Leitkreis desselben hinzentrierte Öffnungen (40, 60) für die jeweiligen Pumpen (25) und Wärmetauscher (26) aufweist zum Einführen in das Innere des Torusmantels (35) deren Unterteil mit den Saugöffnungen und den Austrittsfenstern (38), und

– eine an dem Torusmantel (35) über demselben befestigte senkrechte Trennwand für das heisse Flüssigmetall und das kalte Flüssigmetall bestehend aus Durchtrittsschächte (37a) der Pumpen (25) und Durchtrittsschächte (37b) der Wärmetauscher (26), die bei den entsprechenden Öffnungen (40, 60) der Pumpen und Wärmetauscher angeordnet sind, sowie aus Verbindungswände (44, 64c, 65c) zwischen diesen Schächten (37) zur Bildung einer durchgehenden Wand gemäss der Peripherie des Druckbehälters (27).

2. Sammel- und Trennvorrichtung nach Anspruch 1, dadurch gekennzeichnet, dass die Pumpenschächte (37a) jeweils aus einer zylindrischen Aussenhalbwand (41a) und einer zylindrischen in der Höhe über die Aussenhalbwand (41a) ragende Innenhalbwand (42a) bestehen, die am Rand der Öffnung (40a) entlang an dem Torusmantel (35) befestigt sind, dass die Wärmetauscherschächte (37b) jeweils aus einer zylindrischen Aussenhalbwand (41b) und einer zylindrischen Innenhalbwand (42b) mit einer kleineren Höhe als die Höhe der Halbwand (41b) bestehen, die am Rand der Öffnung (40b) entlang an dem Torusmantel (35) befestigt sind, sowie aus einem inneren Mantelschuss (45), der innen in dem Torusmantel (35) an seinem Unterteil mit den Halbwänden (41b bzw. 42b) verbunden ist, um somit einen kreisförmigen Dichtungskasten für den Wärmetauscher zu bilden, und dass die die Halbwände miteinander verbindenden Übergangswände (44) einen unteren Rand aufweisen, der über der Oberfläche des Torusmantels (35) liegt.

3. Sammel- und Trennvorrichtung nach Anspruch 1, dadurch gekennzeichnet, dass der Torusmantel (35) ein kreisförmiger und geschlossener, das obere Teil seiner Wand durchquerender, durch zwei benachbarte Leitkreise begrenzter Schlitz (60) umfasst, auf den die Pumpen- und Wärmetauscheröffnungen (60a und 60b) zentriert sind, dass die senkrechte Trennwand für das heisse Flüssigmetall und das kalte Flüssigmetall aus einer ersten Wand (64) besteht, die am Aussenrand entlang der durch den Schlitz (60) und die Pumpen- und Wärmetauscher-Durchtrittsöffnungen (60a bzw. 60b) gebildete Öffnung befestigt ist, aus einer zweiten Wand (65), die am Innenrand entlang des Schlitzes (60) und der Pumpen-Durchtrittsöffnungen (60a) befestigt ist, und bei den Wärmetauscher-Durchtrittsöffnungen (60b) zylindrische, zu den entsprechenden Teilen der ersten Wand (64) parallele Halbwände (60b) aufweist, sowie aus zylindrischen Halbwänden (67), die gemäss zwei senkrechten Mantellinien am Innenrand der Wärmetauscher-Durchtrittsöffnungen (60b) entlang auf dem Torusmantel (35) und an der zweiten Wand (65) befestigt sind, wobei ein innerer Mantelschuss (69) innen in dem Schacht (37b) der jeweiligen Wärmetauscher angeordnet und mit der Wand (65) und der Halbwand (67) verbunden ist zur Bildung innen im Torusmantel (35) eines kreisförmigen Wärmetauscher-Dichtungskastens.

4. Sammel- und Trennvorrichtung nach einem der Ansprüche 1, 2 oder 3, dadurch gekennzeichnet, dass der Torusmantel (35) über zwei diskontinuierliche Mantelschüsse (36) auf dem Abstützungsbelag (31) des Kerns (30) an dem peripheren Teil desselben aufliegt.

5. Sammel- un Trennvorrichtung nach einem der Ansprüche 1, 2 oder 3, dadurch gekennzeichnet, dass zum Durchlauf des kalten Natriums aus dem unteren Teil des Kerns (30) ein Raum zwischen dem Torusmantel (35) und dem Reaktor-Hauptbehälter (27) vorgesehen ist, und dass zum Umlauf dieses kalten Metalls ein freier kreisförmiger Raum zwischen der Aussenfläche der senkrechten Trennwand für das kalte Flüssigmetall und das heisse Flüssigmetall und der Wandinnenfläche des Druckbehälters (27) vorgesehen ist.

6. Sammel- und Trennvorrichtung nach Anspruch 2, dadurch gekennzeichnet, dass am unteren Rand der Verbindungswände (44) entlang Flüssigmetall-Ablenkbleche (47) über dem metallischen Torusmantel (35) innen an der senkrechten Wand befestigt sind, wobei zum Ablenken des kalten Flüssigmetalls zur Innenwand des Hauptbehälters (27) hin die Konkavität dieser Ablenkbleche (47) noch oben gerichtet ist.

7. Sammel- und Trennvorrichtung nach einem der Ansprüche 1 oder 2, dadurch gekennzeichnet, dass der metallische Torusmantel (35) aus geraden, nach Abschnitten aneinandergefügte Zylinderteile besteht, wobei diese Abschnitte Ebenen entsprechen, die sich alle gemäss der Senkrechtachse des Reaktorbehälters (27) überschneiden, und dass die Verbindungsplatten (44) zwischen den Schächten (37) eben sind.

8. Sammel- und Trennvorrichtung nach einem der Ansprüche 1, 2 oder 3, dadurch gekennzeichnet, dass jede Pumpe (25) ein kugelförmiges, an Druckleitungen (34) angeschlossenes Druckgefäss (32) umfasst, das innen in einer am unteren Teil des Torusmantels (35) vorgesehenen Öffnung befestigt ist.

**Claims**

1. Device for collecting and separating liquid metal in a fast-neutron nuclear reactor of the integrated type, incorporating a vessel (27) with symmetry of revolution around a vertical axis, a core (30) immersed in the liquid metal filling the vessel, and pumps (25) for circulating the liquid metal, and heat exchangers (26) for cooling the liquid metal leaving the core (30), which are immersed in this liquid metal and arranged vertically in the vessel, at a substantially equal distance from the axis of the latter, the pumps (25) abstracting the cold liquid metal leaving the exchangers (26) to convey it to the base of the core and the heat exchangers incorporating an inlet window (39) in their upper part through which the hot liquid metal leaving the core (30) enters and an outlet window (38) in their lower part through which the cold liquid metal leaves, characterised in that it comprises:

— a toric metal enclosure (35) of circular cross-section, arranged with its axis of revolution coincident with the axis of the vessel (27) at the lower part of the latter vertically relative to the pumps (25) and heat exchangers (26) resting on the core (30) support and comprising, in its wall in its upper part, orifices (40, 60) centred on the upper director circle of the toric enclosure (35) corresponding to each of the pumps (25) and to each of the exchangers (26) for the passage of their lower part comprising the suction orifices and the outlet windows (38), respectively, into the inner volume of the toric enclosure (35), and

— a vertical wall for separating the hot liquid metal from the cold liquid metal, fixed on the toric enclosure (35) above the latter and consisting of passage shafts (37a) for the pumps (25) and the passage shafts (37b) for the heat exchangers (26), arranged in the region of the corresponding openings (40, 60) of the pumps and exchangers and of connecting walls (44, 64c, 65c) between these shafts (37) to form a continuous wall along the periphery of the vessel (27).

2. Collecting and separating device according to Claim 1, characterised in that each of the passage shafts for pumps (37a) consists of an outer cylindrical half-wall (41a) and an inner cylindrical half-wall (42a) higher than the outer half-wall (41a), which are fixed on the toric enclosure (35) along the edge of the opening (40a), that each of the passage shafts for heat exchangers (37b) consists of an outer cylindrical half-wall (41b) and an inner cylindrical half-wall of height lower than the height of the half-wall (41b) which are fixed on the toric enclosure (35) along the edge of the opening (40b) and of an inner shell (45) joined at its lower part to the half-walls (41b and 42b), inside the toric enclosure (35), forming an annular sealing trough for the heat exchanger and that the junction walls (44) connecting the half-walls together have a lower edge situated above the upper surface of the toric enclosure (35).

3. Collecting and separating device according to Claim 1, characterised in that the toric enclosure (35) comprises, passing through its wall in its upper part, a closed annular slit (60) bounded by two neighbouring director circles on which the openings for pumps and heat exchangers (60a and 60b) are centred, that the vertical wall for separating the hot liquid metal from the cold liquid metal consists of a first wall (64) fixed along the outer edge of the opening formed by the slit (60) and the passage openings for pumps and exchangers (60a and 60b), of a second wall (65) fixed along the inner edge of the slit (60) and of the passage openings for pumps (60a) and incorporating, in the region of passages for heat exchangers (60b), cylindrical half-walls parallel to the corresponding parts of the first wall (64), and of cylindrical half-walls (67) fixed on the toric enclosure (35) along the inner edge of the openings for heat exchangers (60b) and on the second wall (65) along two vertical generating lines, an inner shell (69) being arranged inside the shaft (37b) for each of the exchangers and connected to the wall (65) and to the half-wall (67) to form an annular sealing trough for the heat exchanger, inside the toric enclosure (35).

4. Collecting and separating device according to any one of Claims 1, 2 or 3, characterised in that the toric enclosure (35) rests on the floor plating (31) for supporting the core (30) at the peripheral part of the latter, by means of two noncontinuous shells (36).

5. Collecting and separating device according to any one of Claims 1, 2 or 3, characterised in that a space is arranged between the torus (35) and the main reactor vessel (27) for the passage of cold sodium coming from the lower part of the core (30) and that an annular free space is arranged between the outer face of the vertical wall for separating the hot liquid metal from the cold liquid metal and the inner face of the vessel wall (27), for the circulation of this cold liquid metal.

6. Collecting and separating device according to Claim 2, characterised in that deflectors for the liquid metal (47) are fixed above the toric metal enclosure (35) inside the vertical wall, along the lower edge of the junction walls (44), these deflectors (47) having their concavity facing upwards, for guiding the cold liquid metal towards the inner wall of the main vessel (27).

7. Collecting and separating device according to either of Claims 1 or 2, characterised in that the toric metal enclosure (35) consists of right cylindrical sections assembled end to end along cross-sections corresponding to intersecting planes all along the vertical axis of the reactor vessel (27) and in that the junction plates (44) between the passage shafts (37) are planar.

8. Collecting and separating device according to any one of Claims 1, 2 or 3, characterised in that each of the pumps (25) incorporates a delivery sphere (32) which is joined to the delivery lines (34) which is fixed inside an opening arranged in the lower part of the toric enclosure (35).

Fig 1

0 091 872

Fig 2

Fig 3

Fig 5

Fig 6

# Fig 4

Fig 7

25
37
30
35
32
34
31

29          26
65
64
39
66
69
67
38
57
36
28
27

0 091 872

# Fig 8

Fig 9

# Fig 10

65b

26

39

67

26

66

65b

69

64b

35

38